Europäisches Patentamt

European Patent Office

Office européen des brevets

(11) Veröffentlichungsnummer: **0 499 350 A2**

## (12) EUROPÄISCHE PATENTANMELDUNG

(21) Anmeldenummer: **92250028.5**

(22) Anmeldetag: **10.02.92**

(51) Int. Cl.5: **G01T 1/115**, G01T 1/105, G01T 1/02

(30) Priorität: **15.02.91 DE 4105126**

(43) Veröffentlichungstag der Anmeldung:
**19.08.92 Patentblatt 92/34**

(84) Benannte Vertragsstaaten:
**AT DE FR GB IT**

(71) Anmelder: **ENDOS GmbH FÜR STRAHLENMESSTECHNIK**
**Klautschoustrasse 15**
**W-1000 Berlin 65(DE)**

(72) Erfinder: **Holzapfel, Georg, Dr.**
**Marinesteig 5**
**W-1000 Berlin 38(DE)**
Erfinder: **Lesz, Jan, Dr.**
**Treptower Strasse 23**
**W-1000 Berlin 44(DE)**

(54) **Codiertes Festkörperdosimeter.**

(57) Festkörperdosimeter, inbesondere Thermolumineszenzdosimeter (TLD), mit mahreren, Vereinzelbaren und codierten Strahlungsdetektoren, die in einer Dosimeterhülle gestapelt sind. Dabei sind die Detektoren aus einem strahlungsempfindlichen Detektorkern (100) und einem diesen umschließenden und die Codierung tragenden Detektorrahmen (200) zusammengesetzt. In einem Auswerte-Automaten sind Code-Auslesung und Dosis-Auslesung auf derartige Dosimeter abgestimmt.

Fig. 2b

EP 0 499 350 A2

Die Erfindung betrifft ein Festkörperdosimeter der im Oberbegriff des Anspruchs 1 angegebenen Art sowie ein verfahren zur automatischen Auswertung derartiger Dosimeter, die mit einer Code-Anordnung zur Kennzeichnung bzw. Identifizierung der im Dosimeter enthaltenen Strahlungsdetektoren versehen sind, insbesondere für Thermolumineszenzdosimeter (TLDs), wie sie als integrierende Dosimeter in Strahlenschutzdiensten Verwendung finden.

Derartige Dosimeter sind in unterschiedlichen Ausführungen bekannt und bestehen in der Regel aus mehreren strahlungsempfindlichen, substratgestützten Detektoren, der Dosimeterhülle mit Strahlungsfiltern und einem Dosimeterhalter. Eine eindeutige Kennzeichnung der Dosimeter zwecks Zuordnung zu einer bestimmten Person bzw. eine sichere Identifizierung der einzelnen Detektoren eines Dosimeters ist unerläßlich.

Die Detektoren als aktive Bestandteile des Dosimeters werden herkömmlich aus einem pulverförmigen, strahlungsempfindlichen Material, z.B. dotiertem Lithiumfluorid-Salz (LIF: Mg, Ti) hergestellt, entweder als Tabletten oder in dünnen Schichten. Die anderen, passiven Komponenten des Dosimeters können vielfältig ausgestaltet werden.

In einer bekannten Ausführung eines Festkörperdosimeters (Card-TLD) werden mindestens zwei Detektoren nebeneinander auf einer Substratplatte oder -karte (Card) angeordnet und mit dieser fest verbunden. Detektortabletten werden in Löchern der metallischen Karten mittels Teflonfolien eingespannt. Das strahlungsempfindliche Material kann auch als Dünnschichtdetektor direkt in der Teflonfolie eingebettet sein. Bekannt ist auch das Heißpressen einer dünnen Detektorschicht als Spot unmittelbar in Vertiefungen der Substratkarte. Für die Aufnahme des binären Loch- oder Strich- Codes ist ein separates Feld auf der Karte zwischen oder neben den Detektoren erforderlich. Die Detektoren sind durch ihre Lage auf der Karte unterscheidbar.

Für die Regenerierung ist die Aufheizung der Detektoren auf 400° C erforderlich. Teflongestützte Detektoren sind nur bis 300° C aufheizbar. Bei den bekannten heißgepreßten teflonfreien Dünnschicht-Spots ist eine volle Regenerierung möglich, jedoch erschwert die erhöhte Wärmeleitung zwischen den Detektoren und die relativ hohe Kartenmasse deren schnelle lokale Aufheizung für den Auswertungsvorgang.

Bekannt geworden ist auch eine andere Ausführung eines Festkörperdosimeters (Stack-TLD) mit mindestens zwei in einer Dosimeterhülle gestapelten Einzeldetektoren. Da eine größere, zusammenhängende Codierungsfläche bei Einzeldetektoren fehlt, ist die Anbringung eines der bekannten binären Loch- oder Strich-Codes hier schwierig. Andererseits erlaubt die geringere Masse von Einzeldetektoren bei entfallenden Teflonkomponenten eine schnelle und hinreichend hohe Aufheizung für die Auswertung und die volle Regenerierung. Diese Festkörperdosimeter haben jedoch den Nachteil, daß die einzelnen Detektoren, wenn sie von der Dosimeterhülle entfernt sind, dieser nicht ohne weiteres zuordbar sind. Die bekannten Stack-TLDs müssen also einzeln ausgewertet werden, damit die Zuordnung der Detektoren zur gekennzeichneten Dosimeterhülle und somit zu der entsprechenden Person gewährleistet ist. Die verwendeten Einzel-Detektoren sind weiterhin durch ihre ungeschützte Ausbildung relativ instabil und nicht genügend vor äußeren, insbesondere mechanischen Einflüssen sicher.

Als Folge der genannten Nachteile erscheint die Auswertung der bekannten Stack-TLDs in Automaten bisher kaum möglich. Ähnliche Schwierigkeiten ergeben sich bei den bekannten Card-TLDs mit lose in Löchern eingelegten, uncodierten Einzeldetektoren.

Der Erfindung liegt daher die Aufgabe zugrunde, für ein Festkörperdosimeter in Stapelbauweise (Stack-TLD) unter Beseitigung der genannten Nachteile eine Konstruktion anzugeben, mit der eine Codierung der einzelnen Detektoren, insbesondere für eine automatische Auswertung, mit vollständiger Regenerierbarkeit bei den erforderlichen hohen Temperaturen möglich ist.

Diese Aufgabe wird mit den kennzeichnenden Merkmalen des Anspruchs 1 und der Unteransprüche gelöst, und zwar erfindungsgemäß durch zusammengesetzte Detektoren mit einem strahlungsempfindlichen Kern (Detektorkern) und einem den Kern unlösbar als Rahmen umschließenden Code-Ring (Detektorrahmen), wobei insbesondere Ausnehmungen, z.B. radiale Schlitze oder Vertiefungen unterschiedlicher Breite und/oder Länge und/oder verschiedener Winkellage eine Strukturierung des Detektorrahmens und damit die Codierung der Detektoren und des Dosimeters bewirken.

Mit der Erfindung ist durch Codierung jedes einzelnen Detektors dessen unmittelbare und unverwechselbare Identifizierung und Zuordnung automatengerecht möglich; eine Kennzeichnung der Dosimeterhülle ist von sekundärer Bedeutung.

Die Realisierung der Kennzeichnung bzw. Codierung der Detektoren beruht hierbei auf der Erkenntnis, daß mit einem den Detektorkern umgebenden und mit diesem fest verbundenen Detektorrahmen zum einen der strahlungsempfindliche Bereich vor mechanischen Einflüssen schützbar, sowie zum anderen eine Codierung ohne Beeinträchtigung oder Beschränkung des strahlungsempfindlichen Bereichs anordbar ist. Jeder Detektor erhält durch die Kennzeichnung des Rahmens eine ihm eigene Codierung. Dadurch ergeben sich weitreichende konstruktive Möglichkeiten im Hinblick auf die Ausbildung der Detektoren sowie im Hinblick auf die Anordnung und die Art der Codierung.

Mit der Erfindung lassen sich verschiedene Detektoren, welche unterschiedliche Meßgrößen hinsichtlich unterschiedlicher Eindringtiefen der Strahlung in das menschliche Gewebe repräsentativ registrieren, miteinander kombinieren und zu einem einzigen kompaktenDosimeter verbinden.

Der Detektorkern kann in verschiedener Weise gestaltet werden. Es können sowohl strahlungsempfindliche Tabletten als auch heißgepreßte dünne Schichten ohne hitzeempfindliche Komponenten Verwendung finden. Vorzugsweise wird das strahlungsempfindliche Material von einem kreisrunden Substratplättchen getragen, das in den Code- Ring unlösbar eingepreßt wird. Der Code-Ring ist durch einen Anschlag an der Oberseite als Rahmen gestaltet.

Sofern die Tabletten oder auch TLD-empfindliche Einkristallscheibchen mechanisch hinreichend fest sind, können diese ohne Substratplättchen in den Code-Ring eingepreßt werden.

Der kraftschlüssige Verbund von Detektorkern und Detektorrahmen ist im Hinblick auf eine schnelle Montage vorteilhaft. Es ergeben sich aber auch andere produktionstechnische Vorteile: Beispielsweise sind Dünnschichtdetektoren durch Heißpressen des strahlungsempfindlichen Pulvers auf eine größere Substratplatte derart herstellbar, daß nach dem Heißpressen die Detektorkerne aus der nunmehr beschichteten Substratplatte ausgestanzt und nachfolgend mit dem Detektorrahmen form- und/oder kraftschlüssig verbunden werden. Die erfindungsgemäßen codierten Detektoren sind stapelbar.

In einer weiteren Ausgestaltung der Erfindung werden die gestapelten Detektoren eines Dosimeters durch einen gemeinsamen äußeren Spannring als Teil der Dosimeterhülle in einer vorgegebenen Position fixiert. Durch Öffnen des Spannrings können die codierten Detektoren der Dosimeterhülle zwecks Auswertung und Regenerierung entnommen werden.

In einer anderen Weiterbildung der Erfindung dienen vorder- und rückseitige Folien als Teile der Dosimeterhülle zur lösbaren Abdeckung der Detektoren.

Die der Strahlung zugewandte Stirnseite des Spannrings wird dabei mit einer mindestens im strahlungsempfindlichen Bereich lichtundurchlässigen Abdeckfolie bedeckt. Gleichzeitig kann diese obere Abdeckfolie als Strahlungsfilter dienen, vorzugsweise mit einer Masse/Fläche-Belegung $\leq 7$ mg/cm2. Zum einen sind dadurch für den Detektor lichtempfindliche Materialien zur Strahlungserfassung verwendbar, ohne daß diese im Festkörperdosimeter durch Lichteinfall beeinträchtigt werden. Zum anderen sind dadurch ganz bestimmte, für den Meßvorgang entscheidende Strahlen gezielt erfaßbar. Derartige Strahlungsfilter dienen etwa auch zur Bestimmung der Haut- und Oberflächendosis. Infolge der Filterung durch das Material des oberen Detektors und der Abdeckfolie kann die Tiefendosis durch einen unteren Detektor in bezug auf die Dosimeterhülle bzw. auf den Spannring bestimmt werden.

Mit dem Abdecken auch der Rückseite der Anordnung durch eine stärkere Folie wird die Dosimeterhülle geschlossen, und die Detektoren sind hermetisch u.a. gegen Feuchtigkeit abgekapselt.

Vorteilhaft sind miteinander verbundene Folien in Form einer Steckhülle, welche den Detektorstapel aufnimmt und z.B. durch Verschweißen geschlossen wird. Darüber hinaus kann die Steckhülle alle kennzeichnenden Dosimeterdaten (Name des Benutzers, Dosimeternummer, Hersteller, Type u.a.) in Klarschrift tragen.

Die Codierung wird im einzelnen durch die Art der jeweiligen Ausnehmungen und deren Anordnung im Detektorrahmen bestimmt. Die Codierung ist im wesentlichen vor mechanischen Beschädigungen sicher, insbesondere vor möglicherweise versuchten Manipulationen. Des weiteren wird eine automatische Verarbeitung in größeren Stückzahlen mit zuverlässigen Speicher- und Transporttechniken erleichtert.

Bei der ringförmigen Ausbildung des Detektorrahmens erstrecken sich die Ausnehmungen radial vom Rand her nach innen und weisen insbesondere unterschiedliche Längen und/oder Breitenerstreckungen und/oder Winkellagen auf. Vorzugsweise wird die Codierung dabei strichförmig durch Einfräsung von Schlitzen oder Anfräsung von Vertiefungen erzeugt. Die Strukturierung des Code-Rings kann erfindungsgemäß, aber auch durch anders geformte Ausnehmungen, z.B. durch kreisförmige Löcher oder kreisförmige Vertiefungen erfolgen.

In einer Weiterbildung der Erfindung wird der Detektorrahmen mit einer temperaturbeständigen Deckschicht belegt, vorzugsweise mit einer flammgespritzten Keramikschicht, in welche die Code-Struktur durch Fräsungen eingeprägt wird.

Die Code-Auslesung kann photoelektrisch erfolgen, wobei ein Lichtstrahl durch die Strukturierung am Detektorrahmen mittels unterschiedlicher Durchstrahlung oder Reflexion gesteuert wird. Im Falle der Strukturierung in einer isolierenden Deckschicht auf dem metallischen Detektorrahmen kann der unterschiedliche elektrische Widerstand im Bereich der Code-Fräsungen zur Signalgebung durch Abtastelemente, z.B. galvanischer Kontakte, dienen.

Eine vorteilhafte Ausgestaltung der Erfindung kann auch darin bestehen, daß eine Aussparung am Detektorrahmen vorgesehen ist. Der Detektor ist dadurch bei der Auswertung in vorbestimmten Positionen durch eine der Aussparung angepaßte Führung haltbar.

Erfindungsgemäß codierte Festkörperdetektoren sind besonders zur Verarbeitung großer Stückzahlen in einem Auswerteautomaten geeignet, in welchem sie flach liegend geschoben oder getragen werden.

Das Lesen der Codierung erfolgt hierbei durch Abtastung oder Durchstrahlung der Code-Elemente mittels mehrerer beim Lesevorgang relativ zum Detektor feststehender Leseelemente oder aber unter rotierender Relativbewegung zwischen Detektor und mindestens einem Leseelement, d.h. durch parallele oder serielle Übertragung der in den einzelnen Codierungselementen enthaltenen Informationen.

Durch diese unterschiedlichen Möglichkeiten ist ein breites Spektrum zur Erfassung der Codierung gegeben und darüber hinaus auch fertigungstechnisch den Ausbildungen der Codierung entsprechend optimierbar.

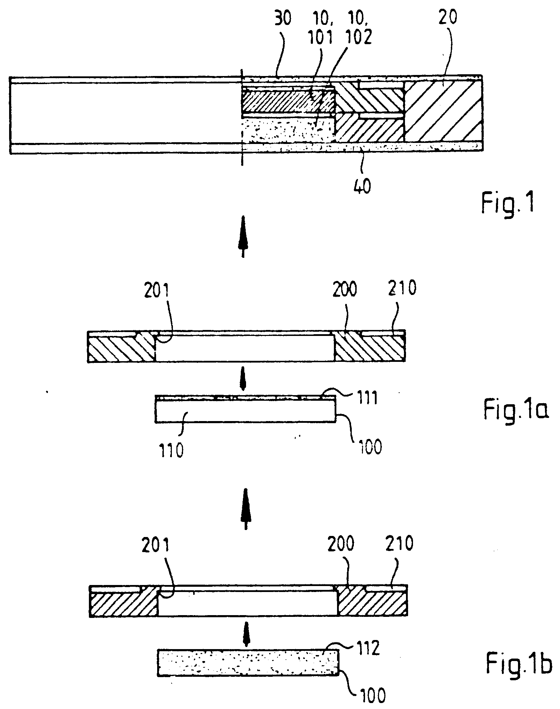

Andere vorteilhafte Weiterbildungen der Erfindung sind in den Unteransprüchen gekennzeichnet bzw. werden nachstehend zusammen mit der Beschreibung bevorzugter Ausführungen der Erfindung anhand der Figuren näher dargestellt. Es zeigen Figuren 1, 1a und 1b einen Querschnitt des erfindungsgemäßen Festkörperdosimeters und zweiExplosionsdarstellungen von Detektorkern und Detektorrahmen als Ausführungsbeispiel.

Figuren 2a und 2b zeigen eine Draufsicht von zwei Ausführungsbeispielen erfindungsgemäß codierter Detektorrahmen (Code-Ringe).

Figuren 3a und 3b zeigen die Draufsicht eines Ausführungsbeispiels des erfindungsgemäßen Spannrings in zwei Positionen.

Figur 4 zeigt das Schema eines beispielhaften Auswerteablaufs der erfindungsgemäßen Festkörperdosimeter in einem Automaten.

Die Figuren 1, 1a und 1b zeigen ein erfindungsgemäßes Dosimeter in Stapelbauweise im Querschnitt und entsprechende Explosionsdarstellungen. Das Dosimeter enthält zwei Detektoren 10, und zwar einen oberen TLD-Dünnschicht-Detektor 101 zur Bestimmung der Hautdosis und einen unteren TLD-Tabletten-Detektor 102 zur Bestimmung der Tiefendosis. Anstelle des Tabletten-Detektors 102 kann aber auch ein zweiter Dünnschicht-Detektor 101 verwendet werden. Die Detektoren werden durch einen Spannring 20 fixiert und durch eine vordere, als Strahlungsfilter wirkende, dünne Folie 30 und durch eine hintere stärkere Folie 40 abgedeckt. Spannring 20 und Folien 30, 40 bilden zusammen eine hermetisch abgeschlossene Dosimeterhülle. Die Detektoren 10, 101, 102 bestehen aus einem Detektorkern 100 und einem diesen unlösbar umschließenden Code-Ring als Detektorrahmen 200.

Der Detektorkern 100 hat einen Durchmesser von 10 mm. Beim oberen Detektor 101 besteht der Kern 100 aus einem 1 mm dicken Substratplättchen 110, z.B. aus Aluminium, das mit einer strahlungsempfindlichen 0,1 - 0,2 mm dünnen Schicht 111, z.B. aus LiF: Mg, Ti durch Heißpressen dauerhaft verschweißt ist. Beim unteren Detektor 102 wird eine strahlungsempfindliche, selbsttragende Tablette 112, z.B. aus LIF: Mg, Ti verwendet.

Die strahlungsempfindlichen Kerne werden bis zum Anschlag in den Code-Ring 200 (Innendurchmesser 10 mm, Außendurchmesser 17 mm, 1,5 mm dick), z.B. aus Al, eingeschoben und mit diesem durch einen Preßsitz unlösbar verbunden.

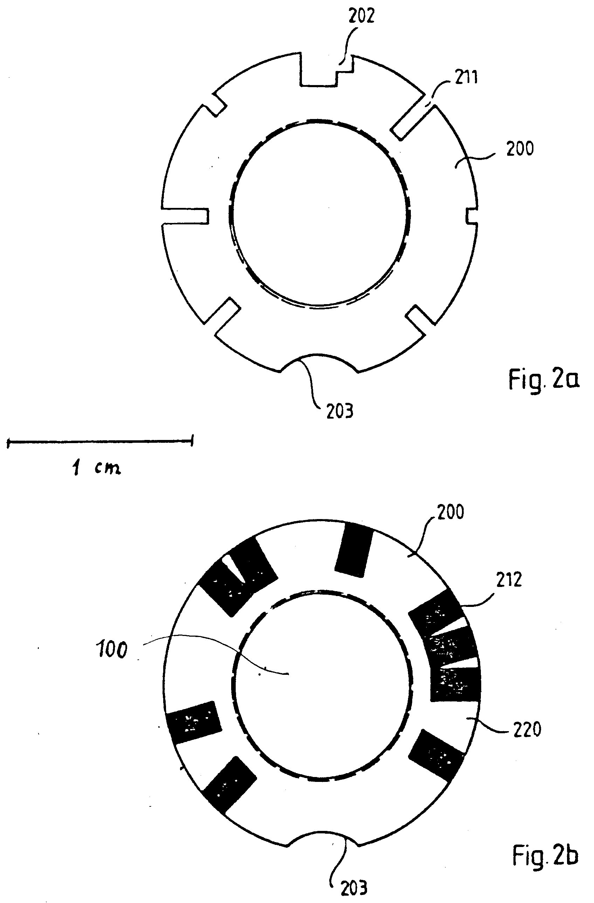

Die Figuren 2a und 2b zeigen zwei bevorzugte Ausführungen der erfindungsgemäßen Detektor-Codierung, und zwar eine dekadische Codierung mit durchgehenden Schlitzen 211 sowie eine binäre Codierung mit Vertiefungen 212 in einer Deckschicht 220 am Detektorrahmen 200.

Die erste Ausführung des erfindungsgemäßen Code-Rings ist mit sechs jeweils um 45° versetzten Schlitz-Dekaden zur zahlenmäßigen Kennzeichnung, und weiteren zwei Aussparungen 202, 203 zur Positionierung in der Dosimeterhülle und im Auswertegerät versehen. Die Zahlenschlitze 211 sind rechteckig mit einer einheitlichen Breite von 1 mm. Die Länge der Schlitze 211 variiert in Stufen von 0,25 mm zwischen 0,5 mm und 2,75 mm und beinhaltet damit die Ziffern n = 0,1,2...9 in jeder Dekade. Fortlaufend im Uhrzeigersinn liegt die erste Dekade (100) bei 1:30 h, die zweite Dekade (101) bei 3:00 h, die dritte Dekade (102) bei 4:30 h, die vierte Dekade (103) bei 7:30 h, die fünfte Dekade (104) bei 9:00 h und die sechste Dekade (105) bei 10:30 h. Es können bis zu 1 Million Dosimeter codiert werden. Im Beispiel der Figur 2 ist die Zahl 287508 als Dosimeternummer codiert. Die asymmetrische Aussparung 202 bei 12:00 h dient zur Unterscheidung oberer und unterer Detektoren 10 und zur Erkennung versehentlicher Kopflagen. Die kreisförmige Aussparung 203 bei 6:00 h dient zur Einstellung der richtigen Winkellage durch eine vorübergehend eingeschobene Nase, insbesondere bei der Code-Auslesung. Oberer und unterer Detektor 10 erhalten eine identische Schlitz-Codierung als Dosimeternummer, die auch bei geschlossenem Dosimeter durch die Abdeckfolien (30,40) hindurch photoelektrisch gelesen werden kann. Die Code-Ringe 200 müssen nicht einzeln codiert werden, sondern können für gleiche Ziffern gruppenweise mit Schlitzen 211 versehen werden.

Die Erfindung ist jedoch nicht auf dieses Beispiel beschränkt. Vielmehr können auch andere Anordnungen auf dem Code-Ring 200 getroffen werden, wobei die Reihenfolge der Ausnehmungen 210, deren Winkellage sowie die Breite variiert werden können. Die Stufenzahl in den Schlitzen 211 ändert sich entsprechend, wenn ein anderes als das dekadische System Verwendung finden soll.

Eine binäre, besonders vorteilhafte, andersartige Codierung mit entsprechender Gestaltung des Code-Rings 200 ist beispielhaft in Figur 2b dargestellt. Der Innendurchmesser des Code-Rings 200 beträgt 10 mm, der Außendurchmesser 17 mm. Eine kreisförmige Aussparung 203 (5 mm Durchmesser, 4 mm Segmentbreite) dient zur Positionierung und zum Transport des Detektors 10 im Auswertegerät. Die Ausnehmungen 210 am Code-Ring 200 bestehen hier aus Vertiefungen 212, und zwar aus oberflächlichen, radialen Anfräsungen von 1,5 mm Breite und 0,3 mm Tiefe. Vorteilhaft ist die Aufbringung einer oberflächlichen Deckenschicht 220, z.B. einer flammgespritzten Keramikschicht (Al2O3; 0,2 mm dick), die im Bereich der Anfräsungen 212 abgetragen wird, so daß unterschiedliche Streifen aus Keramik (Al2O3) und Metall (Al) die Code-Struktur auf dem Detektorrahmen 200 bilden.

Bei einer Winkelöffnung von 15° pro bit können 21 bit auf dem Code-Ring 200 untergebracht werden. Abzüglich von 1 bit zur Unterscheidung oberer und unterer Detektoren 10 im 2er-Stack können mit 20 Bit in dieser Anordnung über 1 Mio Dosimeter codiert werden. Die Auslesung erfolgt automatisch im Uhrzeigersinn, beginnend bei Positionierung 203. Im Beispiel der Fig. 2b ist die Zahl 379 274 codiert. Eine Verringerung der Winkelöffnung, z.B. auf 12° pro bit, ermöglicht eine weitere Erhöhung der bit-Zahl.

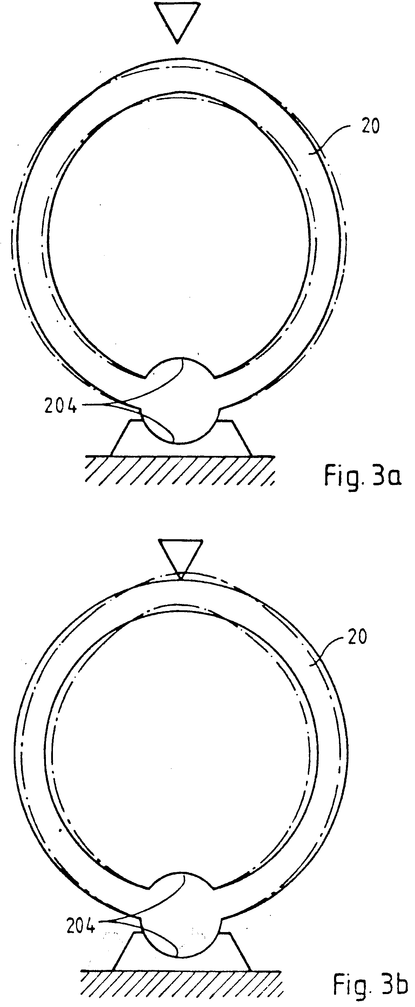

In den Figuren 3a und 3b ist in einer Draufsicht eine Ausbildung eines erfindungsgemäßen Spannrings 20 dargestellt. Dieser ist elastisch verformbar und ellipsenförmig gestaltet, z.B. mit einer langen Innenachse von 18 mm und einer kurzen Innenachse von 16,5 mm. Figur 3a zeigt einen Spannring 20 im entspannten, ellipsenförmigen Zustand und Figur 3b im gespannten, nahezu kreisförmig verformten Zustand. Dabei symbolisiert ein Pfeil die auf den Spannring wirkende Kraft, die diesen elastisch verformt. Die Detektoren 10, z.B. mit einem Durchmesser von 17 mm, sind durch Zusammendrücken des Spannrings 20 leicht einschiebbar. Bei Entlastung paßt sich der Spannring 20 den Konturen der Detektoren 10 an und fixiert diese. Die Entnahme der Detektoren 10 erfolgt unter erneutem Zusammendrücken des Spannrings 20.

Eine innere und eine äußere kreisförmige Nase 204 dienen zur Positionierung der Detektoren 10 im Spannring 20 und des Spannrings 20 im Dosimeterhalter.

Durch die flache scheibenförmige Ausbildung der erfindungsgemäßen Detektoren 10 ist deren automatische Handhabung auch in größeren Stückzahlen ohne weiteres möglich. Hierbei sind aus der Handhabung von Münzen bekannte Transport-, Vereinzelungs-, Lese- und Speichertechniken einsetzbar.

Beispielsweise sind bis zu 200 1,5 mm dicke Detektoren 10 entsprechend 100 aus zwei Detektoren 10 zusammengesetzte Festkörperdosimeter in einem zylindrischen, kompakten Magazin - 350 mm Länge, 25 mm Durchmesser - stapelbar und können in einem durchgehenden Arbeitsgang automatisch ausgewertet und regeneriert werden.

Dabei wird wie folgt verfahren: Die bei einer zentralen Meßstelle eingehenden Dosimeter werden nacheinander durch Entfernung der Abdeckfolien 30, 40 geöffnet und hintereinander in einer Sammelvorrichtung unverwechselbar seitenrichtig gestapelt. Eine derart entstehende Dosimeter-Charge nimmt bis zu 100 Dosimeter auf. Durch Betätigung eines Druckbügels an der Sammelvorrichtung werden nun die Spannringe 20 aller Dosimeter gleichzeitig geöffnet, und die jetzt beweglichen Detektoren werden en bloc mittels eines Stempels in ein rohrförmiges Magazin geschoben.

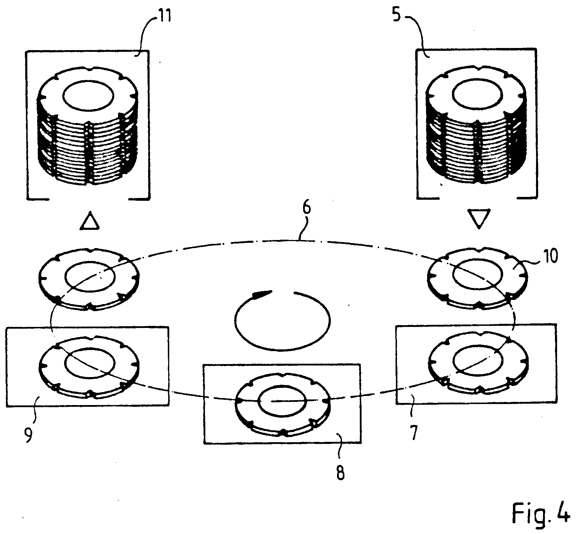

Figur 4 zeigt den Auswertevorgang. Das gefüllte Eingangs-Magazin 5 wird in den Automaten eingesetzt. Geschoben durch einen Drehteller 6 gelangt jeder einzelne Detektor 10 zunächst zu einem Code-Leser 7 zwecks Registrierung der jeweiligen Dosimeternummer und der oberen oder unteren Lage des Detektors 10 im Dosimeter. In einem ersten Meßzyklus wird der Detektor 10 dem Dosis-Leser 9, bestehend aus einer Heizquelle und einem Photovervielfacher, zugeführt. Aus dem Meßwert werden mit den in einem Rechner gespeicherten Korrektur- und Kalibrierfaktoren Haut- und Tiefendosis berechnet und mittels der gespeicherten Code-Daten einer bestimmten namentlich gespeichertes Person zugeordnet. In einem zweiten Meßzyklus kann der Detektor 10 zwecks Prüfung seines individuellen Ansprechvermögens eine Bestrahlungsstation 8 und erneut den Code-Leser 7 und den Dosisleser 9 durchlaufen. Danach gelangen die Detektoren 10 in das Ausgangsmagazin 11.

Dieses wird nun in einem Regenerierungsofen gebracht und dort 1 Stunde bei 400° C und 2 bis 3 Stunden bei 100° C getempert.

Im Anschluß an die Regenerierung gelangen die Detektoren 10 aus dem Ausgangs-Magazin 11 wieder in die Sammelvorrichtung. Hier werden die zusammengehörigen Detektoren 10 eines Dosimeters erneut mit einem Spannring 20 versehen und nach dessen Entnahme aus der Sammelvorrichtung mit Folien 30, 40 umhüllt. Das gekennzeichnete, meßbereite Dosimeter wird wieder seinem Benutzer übergeben.

Die Vorteile der Erfindung resultieren aus der Konstruktion eines Festkörperdosimeters mit gestapelten Einzeldetektoren, die unverwechselbar und dauerhaft codiert sind und eine schnelle, zuverlässige Auswertung in einem Automaten sowie eine volle Regenerierung bei 400° C zulassen. Die Stapelanordnung erlaubt kleine Abmessungen des Dosimeters (20 bis 25 mm Durchmesser, 3 mm dick) und bei übereinanderliegenden Detektoren die Bestimmung der Haut- und Tiefendosis. Es können in einem erfindungsgemäßen Dosimeter sowohl Dünnschicht- als auch Tabletten-Detektoren ohne Teflon-Komponenten Verwendung finden.

Ferner können auch mehr als zwei Detektoren und verschiedene Strahlungsfilter zwischen den Detektoren im Stapel angeordnet werden, z.B. zwecks Energieanalyse der empfangenen Strahlung. Ferner können mehrere erfindungsgemäße Dosimeter mit Detektoren für unterschiedliche Strahlungen nebeneinander, z.B. in einem gemeinsamen Halter, getragen werden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch machen.

**Patentansprüche**

1. Festkörperdosimeter, insbesondere Thermolumineszenzdosimeter (TLD), mit in einer Dosimeterhülle gestapelten, vereinzelbaren, scheibchenförmigen Strahlungsdetektoren, dadurch gekennzeichnet, daß die Detektoren (10) aus einem strahlungsempfindlichen Kern (100) - Detektorkern- und einem, diesen unlösbar umschließenden, mit einer Code-Struktur versehenen Rahmen (200)-Detektorrahmen oder Codering- zusammengesetzt sind.

2. Festkörperdosimeter mit Strahlungsdetektoren nach Anspruch 1, dadurch gekennzeichnet, daß als Detektorkern (100) ein mit strahlungsempfindlichem Material (111,112) belegtes Substratplättchen (120) verwendet wird, das form- und/oder kraftschlüssig mit dem Detektorrahmen (200) unlösbar verbunden ist.

3. Festkörperdosimeter mit Strahlungsdetektoren nach Anspruch 1, dadurch gekennzeichnet, daß als Detektorkern (100) selbsttragende, strahlungempfindliche Tabletten oder Einkristallscheibchen (112) verwendet werden, die form- und/oder kraftschlüssig, d.h. durch einen Preßsitz mit dem Detektorrahmen (200) unlösbar verbunden sind.

4. Festkörperdosimeter mit Strahlungsdetektoren nach den vorangehenden Ansprüchen, dadurch gekennzeichnet , daß ein an den Detektorrahmen (200) angepaßter, lösbarer Spannring (20) vorgesehen ist, dar als Teil der Dosimeterhülle mindestens zwei übereinander gestapelte Detektoren (10) umgreift.

5. Festkörperdosimeter mit Strahlungsdetektoren nach Anspruch 4, gekennzeichnet durch einen elliptisch ausgebildeten Spannring (20), der zwecks Aufnahme der kreisförmigen Detektoren (10) unter Vergrösserung seiner kürzeren Ellipsenachse elastisch verformbar ist, und der im entlasteten Zustand aufgrund seiner Eigenspannung die Detektoren (10) festhält.

6. Festkörperdosimeter nach den vorangehenden Ansprüchen, gekennzeichnet durch eine hermetisch abgeschlossene Dosimeterhülle, die aus dem Spannring (20) und mit diesem oder mitanander lösbar verbundenen Abdeckfolien (30, 40) auf der Vorder- und Rückseite besteht, wobei die hintere Folie (40) gleichzeitig die kennzeichnenden Daten des Dosimeter in klarschrift trägt, und die vordere Folie (30) gleichzeitig als dünnes Strahlenfiter zur Bestimmung der Hautdosis mittels des oberen Detektors dient.

7. Festkörperdosimeter mit Strahlungsdetektoren nach Anspruch 1 und 2, dadurch gekennzeichnet, daß im Detektorrahmen (200) Ausnehmungen (210) vorgesehen sind, die durch ihre Ausbildung und/oder Anordnug die Code-Struktur für den Detektor (10) bilden.

8. Festkörperdosimeter mit Strahlungsdetektoren nach Anspruch 7, dadurch gekennzeichnet, daß die Ausnehmungen (210) am Detektorrahmen (200) radial engeordnet sind und insbesondere eine unterschiedliche Längen- und/oder Breitenerstreckung und/oder Winkellage aufweisen.

9. Festkörperdosimeter mit Strahlungsdetektoren nach Anspruch 7 und 8, dadurch gekennzeichnet, daß durchgefräste Schlitze oder Löcher (211) die Ausnehmungen (210) der Code-Struktur im Detektorrahmen (200) bilden.

10. Festkörperdosimeter mit Strahlungsdetektoren nach Anspruch 7 und 8, dadurch gekennzeichnet, daß angefräste Vertiefungen (212) die Ausnehmungen (210) der Code-Struktur am Detektorrahmen (200) bilden.

11. Festkörperdosimeter mit Strahlungsdetektoren nach Anspruch 10, dadurch gekennzeichnet, daß eine vorzugsweise keramische Deckschicht (220) auf dem Detektorrahmen (200) angebracht ist, die durch angefräste, vorzugsweise streifen- oder kreisförmige Vertiefungen (212) partiell so abgetragen wird, daß ein Metall-/Keramik-Muster entsteht, welches eine vorzugsweise binäre Code-Struktur bildet.

Fig.1

Fig.1a

Fig.1b

Fig. 2a

1 cm

Fig. 2b

Fig. 3a

Fig. 3b

Fig. 4